# EUROPÄISCHE PATENTSCHRIFT

(11) **EP 2 306 280 B1**
(45) Veröffentlichungstag und Bekanntmachung des Hinweises auf die Patenterteilung: **29.11.2017**
(21) Anmeldenummer: 09171968.2
(22) Anmeldetag: 01.10.2009
(51) Int. Cl.: G06F 3/044, G06F 3/045, G02F 1/133, G06F 3/0354

(54) **BERÜHRUNGSSENSITIVE SENSORANORDNUNG UND ANZEIGEVORRICHTUNG**
TOUCH-SENSITIVE SENSOR ASSEMBLY AND DISPLAY DEVICE
AGENCEMENT DE CAPTEUR SENSIBLE AU CONTACT ET DISPOSITIF D'AFFICHAGE

(43) Veröffentlichungstag der Anmeldung: 06.04.2011
(73) Patentinhaber: Siemens Aktiengesellschaft, 80333 München (DE)
(72) Erfinder: Streichert, Gerhard, 92353, Postbauer-Heng (DE)

(56) Entgegenhaltungen:
- WO-A2-02/052495
- US-A1- 2004 061 688
- US-A1- 2004 239 648

## Beschreibung

Die Erfindung betrifft eine berührungssensitive Sensoranordnung ausgestaltet als ein lichtdurchlässiger Schichtenaufbau umfassend eine erste Schicht, eine zweite Schicht, ein Mittel zum Erfassen einer Berührung oder Annäherung auf einer Berührfläche, wobei die erste Schicht die Berührfläche und eine der Berührfläche gegenüberliegende Gegenfläche aufweist, wobei die zweite Schicht die Mittel zum Erfassen einer Berührung aufweist und zur Gegenfläche gerichtet angeordnet ist.

Des Weiteren betrifft die Erfindung eine berührungssensitive Anzeigevorrichtung zur Bedienung eines elektrischen Gerätes aufweisend einen Bildschirm.

Berührungssensitive Sensoranordnungen sind dem Fachmann auch als Touchsensoren bekannt. Diese Touchsensoren bilden im gemeinsamen Aufbau mit einem Bildschirm einen berührungssensitiven Bildschirm, welcher auch als Touchscreen bezeichnet wird. Durch den Touchsensor können beim Berühren der durch den Touchsensor gebildeten Bildschirmoberfläche Aktionen ausgelöst werden, welche sich dazu eignen ein elektrisches Gerät zu steuern. Derartige Touchscreens finden heutzutage Anwendung in Eingabegeräten, beispielsweise zur Fahrzeugdiagnose, in der Industrie- und Anlagensteuerung, in Industrie-PC's, in der Medizintechnik, in Kassenautomaten, oder auch bei Handheld-Computern, welche beispielsweise mit einer Stifteingabe bedient werden können.

Werden oben genannte Geräte in rauer Umgebung, insbesondere bei starker Kälte eingesetzt, dann kann die Bildfläche bzw. die Berührfläche betauen oder einfrieren, welches eine einwandfreie Funktion der Sensoranordnung beeinträchtigt.

In der WO 02/052495 A1 wird ein beheizbarer Monitor offenbart, von Nachteil ist es, dass hier eine Touch-Anordnung fünf Schichten aufweist.

Es ist daher die Aufgabe der Erfindung, eine Sensoranordnung bereitzustellen, welche einfacher aufzubauen ist.

Die Aufgabe wird für die eingangs genannte Sensoranordnung durch die Merkmale des Anspruchs 1 gelöst. Durch die Anordnung der beheizbaren dritten Schicht kann die durch die dritte Schicht abgegebene Wärme die Sensoranordnung gegenüber der Umgebungstemperatur derart aufheizen, dass eine Betauung oder ein Einfrieren der Berührfläche verhindert wird. Ein Bediener, welcher beispielsweise durch eine Fingerbedienung an der Berührfläche eine Aktion auslösen möchte, kann dies nun auch bei beispielsweise kalten Umgebungstemperaturen sicher ausführen.

In einer vorteilhaften Ausgestaltung sind die Schichten als eine bauliche Einheit ausgestaltet. Dabei ist die erste Schicht als eine Trägerschicht, die zweite Schicht als eine Sensorschicht und die dritte Schicht als die erfindungsgemäße Heizschicht anzusehen. Diese Schichten sind vorteilhaft derart zusammengefasst, dass ein Schichtverbundwerkstoff mit den geforderten Funktionen, wie Erfassen einer Berührung oder Annäherung, Stabilisierung durch die Trägerschicht, und Einleiten von Heizwärme bereitgestellt ist.

In einer Weiterbildung ist die dritte Schicht als ein lichtdurchlässiger, elektrisch leitender Film ausgestaltet. Dieser elektrisch leitende Film kann beispielsweise durch eine Metallbedampfung der entsprechenden Oberfläche der dritten Schicht realisiert sein. Da die Metallbedampfung einen dünnen "Heizmantel" auf der Oberfläche der dritten Schicht darstellt, kann durch Einleiten eines elektrischen Stromes in die dritte Schicht bzw. durch Anlegen einer elektrischen Spannung an die dritte Schicht in der mit der Metallbedampfung versehenen Fläche eine Verlustleistung erzielt werden, welche in Wärme umgesetzt wird. Diese Wärme wiederum heizt die Sensoranordnung auf und hält die Berührfläche frei von störenden klimatischen Auswirkungen, wie einer Betauung.

In einer weiterführenden Ausgestaltung ist die Sensoranordnung derart ausgestaltet, dass die Mittel zum Erfassen einer Berührung oder Annäherung als elektrische Elemente ausgestaltet sind, welche mit einer Steuereinheit zum Auswerten von durch die elektrische Elemente erzeugten elektrischen Signale verbindbar ist. Die elektrischen Elemente können beispielsweise derart ausgestaltet sein, dass die Erfassung einer Berührung oder einer Annäherung an die Sensoranordnung optisch mit Infrarotlicht, kapazitiv, resistiv, induktiv oder mit Oberflächenwellen arbeitet.

Eine in die Sensoranordnung abgegebene Heizleistung kann dadurch weiter optimiert werden, wenn eine vierte Schicht vorhanden ist und die erste Schicht und die vierte Schicht als eine Glasscheibe ausgebildet sind und die zweite Schicht im Inneren der Glasscheibe angeordnet ist, wobei eine Fläche der Glasscheibe wiederum als eine dem Betrachter zugewandte aktive Glasfläche ausgestaltet und die weitere Fläche der Glasscheibe als eine inaktive Glasfläche ausgestaltet ist wobei die dritte Schicht auf der inaktiven Glasfläche angeordnet ist. Durch diesen Schichtaufbau wird wiederum eine bauliche Einheit geschaffen, welche durch den besonderen Aufbau flach ausgestaltet werden kann, welches den Vorteil einer geringeren Bauhöhe bei elektrischen Geräten liefert. Bei der Herstellung einer derartigen Glasscheibe könnte beispielsweise zuerst die vierte Schicht gegossen werden und auf die vierte Schicht die zweite Schicht als Sensoranordnung aufgebracht werden und darauf aufbauend die erste Schicht über die Sensorschicht gegossen werden, so dass sich eine Glasscheibe herstellen lässt, in der die Sensorschicht eingebettet ist. Um nun die dritte Schicht, welche als Heizschicht fungiert, auf die Glasscheibe aufzubringen ist es von Vorteil die Glasscheibe, beispielsweise mit der Hochvakuumtechnik mit beispielsweise Edelgas-Ionen, welche wiederum aus einem geeignetem Metall Atome herausziehen, zu beschichten, vorteilhaft wäre hier durch stark beschleunigte Edelgas-Ionen einzelne Atome aus einer Zink-Aluminiumplatte herauszulösen, welche sich auf der Oberfläche der Glasscheibe ablagern. Danach ist es von Vorteil, wenn das Zink ausreichend Zeit zum Oxydieren hat, damit sich die Aluminium-Atome mit den Zink-Atomen verbinden und die Schicht leitfähig und durchsichtig wird.

Bei der zuvor genannten Ausgestaltung übernimmt die eine Glasscheibe die Funktion als eine Trägerschicht, als eine Sensorschicht und als eine Heizschicht. Im Hinblick auf einen paralaxen Fehler, bei beispielsweise schräger Bedienung, kann durch diesen genannten Aufbau der paralaxen Fehler reduziert werden, da ein Abstand zwischen der äußeren Berührfläche und einem üblicherweise dahinterliegenden Bildschirm zur Darstellung von bedienbaren Informationen deutlich reduziert werden kann. Auch geringere Kosten in der Herstellung und das letztendlich durch Herstellung reduzierte geringere Gewicht sind als Vorteil zu nennen. Beim Aufbau einer Sensoranordnung mit einem Display zum Ausgestalten eines Touchscreens wird die Anzahl von Glasscheiben bei dieser Aufbauweise mit Vorteil reduziert.

Durch eine gleichmäßige Beschichtung mit der elektrisch leitenden Schicht kann die Sensoranordnung auch gleichmäßig über ihre gesamte Fläche elektrisch beheizt werden, so dass der Bedienbereich der Sensoranordnung im Wesentlichen in allen Bereichen freigehalten wird von beispielsweise einer störenden Betauung.

In einer weiterführenden Ausgestaltung weist die dritte Schicht in ihrem Randbereich eine Leiterbahn zur Versorgung der dritten Schicht mit elektrischem Strom auf. Beispielsweise wird an einer ersten Seite der Glasscheibe im Randbereich eine Leierbahn aus Silber mit einer Breite von vorzugsweise 8-10 mm aufgetragen und an einer weiteren Seite der Glasscheibe, ebenfalls in dessen Randbereich, wiederum eine Leiterbahn aus Silber mit einer ähnlichen Breite aufgetragen. An diese Leiterbahnen kann vorzugsweise eine elektrische Spannung angelegt werden, welche zu einem gleichmäßigen Stromfluss und somit zu einer gleichmäßigen Erwärmung der dritten Schicht, ausgestaltet als Heizschicht, führt.

Bei der Ausgestaltung mit den Leiterbahnen auf der dritten Schicht ist es vorteilhaft, wenn an der Leiterbahn eine Anschlussleitung angeordnet ist.

Im Hinblick auf einen späteren Einbau der Sensoranordnung in ein elektrisches Gerät ist es von Vorteil, wenn die Anschlussleitung und die Steuerleitungen, welche zwischen den elektrischen Elementen und der Steuereinheit angeordnet sind, zusammen in einer flexiblen Versorgungsleitung geführt sind.

Die eingangs genannte Aufgabe wird ebenfalls durch eine berührungssensitive Anzeigevorrichtung zur Bedienung eines elektrischen Gerätes aufweisend einen Bildschirm gelöst, wenn die berührungssensitive Anzeigevorrichtung mit einer Sensoranordnung nach einem der Ansprüche 1 bis 8 ausgestaltet ist, wobei die Sensoranordnung vor dem Bildschirm derart angeordnet ist, dass die Berührfläche dem Betrachter zugewandt ist.

Mögliche Ausgestaltungsformen der Sensoranordnung und der berührungssensitiven Anzeigevorrichtung werden in der Zeichnung näher beschrieben, es zeigen:
- FIG 1: eine Sensoranordnung im Schichtenaufbau in einer Schnittdarstellung durch die Sensoranordnung und
- FIG 2: eine Anzeigevorrichtung mit einer Sensoranordnung und einem Display ebenfalls in einer Schnittdarstellung.

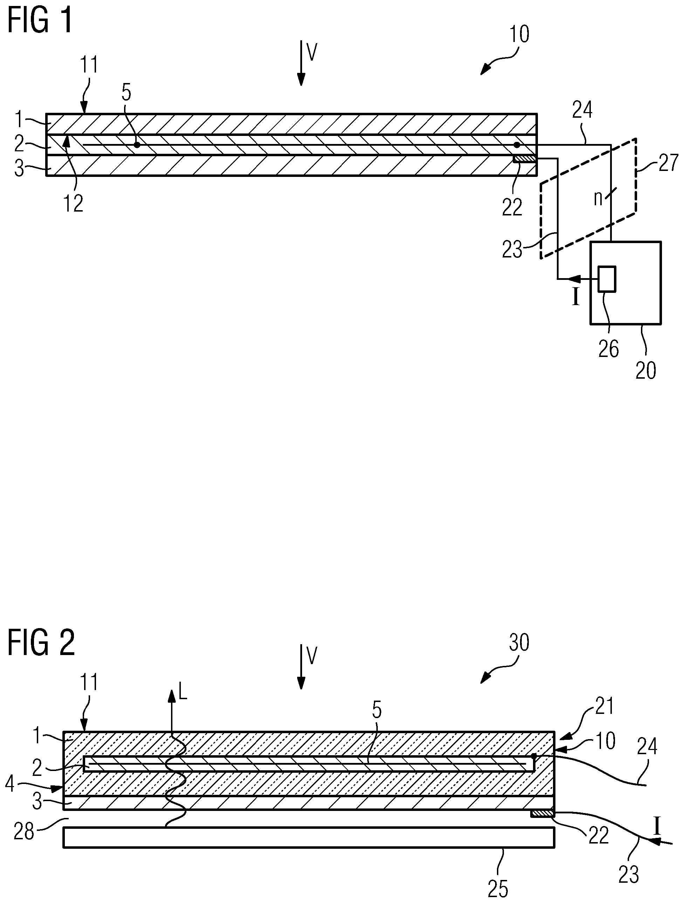

In FIG 1 ist eine berührungssensitive Sensoranordnung 10 ausgestaltet als ein lichtdurchlässiger Schichtenaufbau mit einer ersten Schicht 1, einer zweiten Schicht 2 und einem Mittel 5 zum Erfassen einer Berührung oder Annäherung auf einer Berührfläche 11 dargestellt. Die erste Schicht 1 ist als eine Trägerschicht ausgestaltet, welche die zweite Schicht 2, ausgestaltet als eine Sensorschicht, und eine dritte Schicht 3 trägt. Neben einer Tragfunktion hat die Trägerschicht 1 auch die Funktion die Sensoranordnung 10 stabil auszugestalten und sie gegen ständige Berührung durch einen Bediener vor Abnutzung zu schützen.

Die erste Schicht 1 weist die Berührfläche 11 und einer der Berührfläche 11 gegenüberliegende Gegenfläche 12 auf. Die zweite Schicht 2 schließt sich direkt an die Gegenfläche 12 der ersten Schicht 1 an. In der zweiten Schicht 2 sind die Mittel 5 zum Erfassen einer Berührung oder Annäherung eingebettet.

Die Mittel 5 könnten beispielsweise als Membran-Folien aus Indium-Zinkoxyd (ITO) ausgestaltet sein. Dabei ist eine erste Folienschicht im Abstand von einer zweiten Folienschicht angeordnet, wobei der Abstand der ersten Folie von der zweiten Folie durch miniaturisierte Abstandshalter festgelegt ist. Wird die Folie, beispielsweise von oben einem Druck ausgesetzt, so wird der Abstand zwischen den Folien verringert und es kann hierdurch aufgrund einer Auswertung einer Widerstandsmatrix ein Rückschluss auf eine X- und Y-Koordinate der Berührung an der Berührfläche erfolgen.

Eine weitere Realisierungsmöglichkeit der elektrischen Elemente ist eine Auslegung auf ein kapazitives Verhalten. Durch mikrofeine einzelne elektrisch leitende Bahnen kann die Berührfläche in eine Vielzahl von Sensorzellen aufgeteilt werden und diese Sensorzellen bilden wiederum eine kapazitive Matrix, welche auf eine Annäherung, beispielsweise durch einen Finger einer Bedienperson, oder auf einen Fingerdruck kapazitiv beeinflusst wird, welches Rückschlüsse auf die angewählten X- und Y-Koordinaten zulässt.

An die zweite Schicht 2 schließt sich die dritte Schicht 3 an, welche aus einem geeigneten lichtdurchlässigen Material ausgestaltet ist. Dieses lichtdurchlässige und elektrisch leitende Material ist durch Anlegen einer Spannung bzw. eines Stromes I an eine Leiterbahn 22 beheizbar. Die Leiterbahn 22 ist längs einer Seitenkante der dritten Schicht 3 angeordnet. Die Leiterbahn 22 ist mit einer Anschlussleitung 23 verbunden, welche wiederum zu einer Steuereinheit 20 führt. In der Steuereinheit 20 ist ein Stromregler 26 angeordnet, welcher als Heizregler dient. Der Stromregler 26 treibt durch die Anschlussleitung 23 den für die Beheizung der Sensoranordnung 10 notwendigen Strom I. Der Strom I wird sich bei seinem Stromfluss in der dritten Schicht 3 gleichmäßig verteilen und somit entsteht in der Fläche der Schicht 3 eine Verlustleistung, die in Wärme umgesetzt wird. Die Sensoranordnung 10 ist damit gleichmäßig über ihre gesamte Fläche elektrisch beheizbar.

Um die weiter oben erwähnten X- bzw. Y-Koordinaten über die elektrischen Elemente der Mittel 5 auszuwerten, sind die Mittel 5 über Steuerleitungen 24, wobei die Steuerleitungen 24 n-fach ausgelegt sein können, mit der Steuereinheit 20 verbunden. Die Steuereinheit 20 ist als ein dem Fachmann bekannter Touchcontroller ausgestaltet, welcher die von den Mitteln 5 gesendeten Signale auswertet und in die entsprechenden X-bzw. Y-Koordinaten umrechnet und an ein vorzugsweise angeschlossenes Computersystem weitergibt.

Ausgehend von einer Blickrichtung V, welche eine Bedienperson, welche vor der Sensoranordnung 10 steht auf die Sensoranordnung 10 ausübt, ist in Blickrichtung V nach der zweiten Schicht 2 die dritte Schicht 3 angeordnet.

Gemäß FIG 2 ist ein weiteres Ausführungsbeispiel der Sensoranordnung 10 dargestellt. In diesem Zusammenhang wirkt die Sensoranordnung 10 mit einem Bildschirm 25 als eine Anzeigevorrichtung 30 zusammen. Diese Anzeigevorrichtung 30 bildet einen Touchscreen, also einen Bildschirm auf denen Informationen dargestellt werden können und durch Berührung ein Programm interaktiv gesteuert werden.

In der Ausgestaltungsvariante nach FIG 2 ist die Sensoranordnung 10 derart ausgestaltet, dass durch den Aufbau der unterschiedlichen Schichten ein Schichtverbundwerkstoff entstanden ist. Als weiteres ist nun eine vierte Schicht 4 vorhanden, wobei die vierte Schicht 4 und die erste Schicht 1 als eine zusammenhängende Glasscheibe 21 ausgebildet sind und die zweite Schicht 2, also die Sensorschicht, im Inneren der Glasscheibe 21 angeordnet ist. Bei diesem Aufbau ist eine Fläche der Glasscheibe 21 als eine dem Betrachter zugewandte aktive Glasfläche ausgestaltet und die weitere Fläche der Glasscheibe 21 als eine inaktive Glasfläche ausgestaltet. Der Betrachter, mit seiner Blickrichtung V, blickt durch die Glasscheibe 21 sein Blick trifft dabei zuerst auf die aktive Glasfläche der Glasscheibe 21 und durchdringt sodann die inaktive Fläche der Glasscheibe 21.

Zwischen der aktiven Glasfläche und der inaktiven Glasfläche ist die zweite Schicht 2 in der Glasscheibe 21 angeordnet. Die zweite Schicht 2 mit ihren Mitteln 5, welche als kapazitive Sensormatrix ausgestaltet sind, ist fertigungstechnisch derart in der Glasscheibe 21 eingebettet, dass sich bei einer Betrachtung durch die Glasscheibe 21 möglichst wenig Reflektionen bzw. Störschichten ergeben.

Auf der inaktiven Seite der Glasscheibe 21 ist die dritte Schicht 3 als eine lichtdurchlässige, elektrisch leitende Metallbedampfung aufgebracht. Diese elektrisch leitende Metallbedampfung kann, wie in FIG 1 erläutert, über die Leiterbahn 22 mit der Anschlussleitung 23 zum Heizen mit elektrischem Strom I versorgt werden.

In Blickrichtung V gesehen ist nach der dritten Schicht 3 der Bildschirm 25 angeordnet. Der Bildschirm 25 ist beispielsweise als ein LCD-Flachdisply ausgestaltet. Dieses Flachdisplay ist derart angeordnet, dass sich zwischen der Sensoranordnung 10 und dem Flachdisplay ein Luftspalt 28 ergibt. Ein von dem Flachdisplay ausgesendeter Lichtstrahl L durchdringt entgegen der Betrachtungsrichtung V die Sensoranordnung 10, dabei trifft der Lichtstrahl L zuerst auf die lichtdurchlässige dritte Schicht 3, durchdringt die vierte Schicht 4, die zweite Schicht 2, die erste Schicht 1 und tritt schließlich an der Berührfläche 11 als Lichtsignal aus.

Bei dem Aufbau als eine Glasscheibe 21 verschmelzen, beispielsweise bei einem Herstellungsverfahren mit einer Gusstechnik, die erste Schicht 1 mit der vierten Schicht 4 derart, dass die zweite Schicht 2 sicher in dieser Verschmelzung eingebettet ist und sich durch die Verschmelzung zu einer Glasscheibe 21 für die Glasscheibe 21 eine möglichst kleine Lichtbrechung bzw. eine hohe Lichtdurchlässigkeit ergibt. Diese Lichtdurchlässigkeit ist von Vorteil um die von dem Flachdisplay ausgesendeten Informationen dem Betrachter besser zur Verfügung zu stellen.

Wird eine derartige Anzeigevorrichtung 30, beispielsweise zur Steuerung eines industriellen Prozesses in einer kalten Umgebung eingesetzt, so kann die dritte Schicht 3, welche die Sensoranordnung 10 gleichmäßig aufheizt, die Berührfläche 11 vor Betauung oder Einfrieren, schützen.

## Patentansprüche

1. Berührungssensitive Sensoranordnung (10) ausgestaltet als ein lichtdurchlässiger Schichtenaufbau umfassend
- eine erste Schicht (1),
- eine zweite Schicht (2),
- ein Mittel (5) zum Erfassen einer Berührung oder Annäherung auf einer Berührfläche,
wobei die erste Schicht (1) die Berührfläche (11) und eine der Berührfläche (11) gegenüberliegende Gegenfläche (12) aufweist,
wobei die zweite Schicht (2) die Mittel (5) zum Erfassen einer Berührung aufweist und zur Gegenfläche (12) gerichtet angeordnet ist, wobei ausgehend von einer durch einen Betrachter auf die Berührfläche (11) gerichteten Blickrichtung (V), in Blickrichtung (V) nach der zweiten Schicht (2) eine dritte Schicht (3) angeordnet ist, welche derart ausgestaltet ist, dass diese lichtdurchlässig und elektrisch beheizbar ist, wobei eine vierte Schicht (4) vorhanden ist, **dadurch gekennzeichnet, dass** die erste Schicht (1) und die vierte Schicht (4) als eine zusammenhängende Glasscheibe (21) ausgebildet sind und die zweite Schicht (2) im inneren der Glasscheibe (21) angeordnet ist, wobei eine Fläche der Glasscheibe (21) wiederum als eine dem Betrachter zu gewandte aktive Glasfläche (11) ausgestaltet ist und die weitere Fläche der Glasscheibe (21) als eine inaktive Glasfläche ausgestaltet ist, wobei die dritte Schicht (3) auf der inaktiven Glasfläche angeordnet ist.

2. Sensoranordnung (10) nach Anspruch 1, wobei die Schichten (1, 2, 3) eine bauliche Einheit bilden und als ein Verbundmaterial ausgestaltet sind.

3. Sensoranordnung (10) nach Anspruch 1 oder 2, wobei die dritte Schicht (3) als ein licht durchlässiger, elektrisch leitender Film ausgestaltet ist.

4. Sensoranordnung (10) nach einem der Ansprüche 1 bis 3, wobei die Mittel (5) zum Erfassen einer Berührung als elektrische Elemente ausgestaltet sind, welche mit einer Steuereinheit (20) zum Auswerten von durch die elektrischen Elemente erzeugten elektrischen Signale verbindbar ist.

5. Sensoranordnung (10) nach einem der Ansprüche 1 bis 4, wobei die dritte Schicht (3) in ihrem Randbereich eine Leiterbahn (22) zur Versorgung der dritten Schicht (3) mit elektrischem Strom (I) aufweist.

6. Sensoranordnung (10) nach Anspruch 5, wobei an der Leiterbahn (22) an eine Anschlussleitung (23) angeordnet ist.

7. Sensoranordnung (10) nach Anspruch 6, wobei die Anschlussleitung (23) und die Steuerleitungen (24), welche zwischen den elektrischen Elementen und der Steuereinheit (20) angeordnet sind, zusammen in einer flexiblen Versorgungsleitung (27) geführt sind.

8. Berührungssensitive Anzeigevorrichtung (30) zur Bedienung eines elektrischen Gerätes aufweisend einen Bildschirm (25), **gekennzeichnet durch** eine Sensoranordnung (10) nach einem der Ansprüche 1 bis 7, wobei die Sensoranordnung (10) vor dem Bildschirm (25) derart angeordnet ist, dass die Berührfläche (11) dem Betrachter zugewandt ist.

## Claims

1. Touch-sensitive sensor assembly (10) designed as a transparent layer structure comprising
- a first layer (1),
- a second layer (2),
- a means (5) for detecting a touch or proximity to a contact surface,
wherein the first layer (1) has the contact surface (11) and a counter surface (12) lying opposite the contact surface (11),
wherein the second layer (2) has the means (5) for detecting a touch and is arranged directed towards the counter surface (12), wherein, starting from a viewing direction (V) directed by an observer onto the contact surface (11), a third layer (3) is arranged after the second layer (2) in a viewing direction (V), and is designed such that it is transparent and can be electrically heated, wherein a fourth layer (4) is present,
**characterised in that**
the first layer (1) and the fourth layer (4) are designed as a contiguous glass pane (21) and the second layer (2) is arranged inside the glass pane (21), wherein a surface of the glass pane (21) in turn is designed as an active glass surface (11) facing the observer and the further surface of the glass pane (21) is designed as an inactive glass surface, wherein the third layer (3) is arranged on the inactive glass surface.

2. Sensor assembly (10) according to claim 1, wherein the layers (1, 2, 3) form a structural unit and are designed as a composite material.

3. Sensor assembly (10) according to claim 1 or 2, wherein the third layer (3) is designed as a transparent, electrically conductive film.

4. Sensor assembly (10) according to one of claims 1 to 3, wherein the means (5) for detecting a touch are designed as electrical elements, and can be connected to a control unit (20) for evaluating electrical signals generated by the electrical elements.

5. Sensor assembly (10) according to one of claims 1 to 4, wherein the third layer (3) has, in its edge region, a conductor track (22) for supplying the third layer (3) with electric current (I).

6. Sensor assembly (10) according to claim 5, wherein a connection line (23) is arranged on the conductor track (22).

7. Sensor assembly (10) according to claim 6, wherein the connection line (23) and the control lines (24) which are arranged between the electric elements and the control unit (20) are guided together in a flexible supply line (27).

8. Touch-sensitive display device (30) for operating an electrical device having a screen (25), **characterised by** a sensor assembly (10) according to one of claims 1 to 7, wherein the sensor assembly (10) is arranged in front of the screen (25) such that the contact surface (11) faces the observer.

## Revendications

1. Agencement (10) de capteur sensible au contact conformé en structure stratifiée perméable à la lumière, comprenant
- une première couche (1),
- une deuxième couche (2),
- un moyen (5) de détection d'un contact ou que l'on se rapproche d'une surface de contact,
dans lequel la première couche (1) a la surface (11) de contact et une surface (12) antagoniste opposée à la surface (11) de contact,
dans lequel la deuxième couche (2) a les moyens (5) de détection d'un contact et est dirigée vers la surface (12) antagoniste, dans lequel, à partir d'une direction (V) de vision dirigée sur la surface (11) de contact par un observateur, il est disposé dans la direction (V ) de vision, après la deuxième couche (2), une troisième couche (3) conformée de manière à être perméable à la lumière et à pouvoir être chauffée électriquement, une quatrième couche (4) étant présente,
**caractérisé en ce que** la première couche (1) et la quatrième couche (4) sont constituées sous la forme d'une lame (21) de verre d'un seul tenant, et la deuxième couche (2) est disposée à l'intérieur de la lame (21) de verre, une surface de la lame (21) de verre étant conformée à nouveau sous la forme d'une surface (11) de verre active, tournée vers l'observateur, et l'autre surface de la lame (21) de verre étant conformée sous la forme d'une surface de verre inactive, la troisième couche (3) étant disposée sur la surface de verre inactive.

2. Agencement (10) de capteur suivant la revendication 1, dans lequel les couches (1, 2, 3) forment une unité de construction et sont conformées sous la forme d'un matériau composite.

3. Agencement (10) de capteur suivant la revendication 1 ou 2, dans lequel la troisième couche (3) est conformée sous la forme d'une pellicule perméable à la lumière et conductrice de l'électricité.

4. Agencement (10) de capteur suivant l'une des revendications 1 à 3, dans lequel les moyens (5) de détection d'un contact sont conformés sous la forme d'éléments électriques, qui peuvent, pour l'exploitation de signaux électriques produits par les éléments électriques, être reliés à une unité (20) de commande.

5. Agencement (10) de capteur suivant l'une des revendications 1 à 4, dans laquelle la troisième couche (3) a, dans sa partie de bord, une piste (22) conductrice d'alimentation de la troisième couche (3) en courant (I) électrique.

6. Agencement (10) de capteur suivant la revendication 5, dans laquelle une ligne (23) de connexion est montée sur la piste (22) conductrice.

7. Agencement (10) de capteur suivant la revendication 6, dans laquelle la ligne (23) de connexion et les lignes (24) de commande, qui sont disposées entre les éléments électriques et l'unité (20) de commande, sont guidées ensemble en une ligne (27) d'alimentation souple.

8. Dispositif (30) d'affichage sensible au contact, pour le fonctionnement de l'appareil électrique comportant un écran (25), **caractérisé par** un agencement (10) de capteur suivant l'une des revendications 1 à 7, l'agencement (10) de capteur étant disposé devant l'écran (25), de manière à ce que la surface (11) de contact soit tournée vers l'observateur.
